# EUROPEAN PATENT APPLICATION

(11) **EP 2 957 812 A2**
(43) Date of publication of application: **23.12.2015**
(21) Application number: 15388002.6
(22) Date of filing: 15.04.2015
(51) Int. Cl.: F16L 59/16, F16L 59/20, F16L 13/02, F16L 41/08

(54) **A PROCESS FOR PRODUCING A BRANCH ON A PRE-INSULATED PIPE**

(30) Priority: 16.06.2014 DK 201470357
(71) Applicant: Pipeteq Systems A/S, 5900 Rudkobing (DK)
(72) Inventor: Bech, Lars Ehlern, 5900 Rudkøbing (DK)
(74) Representative: Larsen & Birkeholm A/S

(57) **Abstract**

The present invention relates to a process for producing a branch (200) on a pre-insulated pipe (102,104), and to insulated branched medium conveying pipes obtainable by the process.

## Description

### Technical field of the invention

The present invention relates to insulated medium conveying pipes. More specifically, the present invention relates to a process for producing a branch on a pre-insulated pipe, and to insulated branched medium conveying pipes obtainable by the process.

### Background of the invention

It is prior known to make insulated branched medium conveying pipes by welding one or more metal branch pipes unto a main metal pipe, building a jacket pipe around the entire structure, and then introducing an insulation material between the metal pipes and the jacket pipe by adding the insulation material in a liquid state, and letting the insulation material expand and solidify through a number of consecutive development stages. However, it is well known that the insulation property is uneven across the length of branched medium conveying pipe. Furthermore, in order to mass produce such insulated T-pipe branches with the above mentioned process; the position of the branch is fixed to specific positions on the medium conveying pipe.

Hence, there is a need for insulated branched medium conveying pipes that have an even insulation property across the length of the main metal pipe. Furthermore, there is a need for a process for producing such insulated branched medium conveying pipes that is not limited by fixed branch positions on the main metal pipe.

### Summary of the invention

One aspect relates to a process for producing a T-branch on a pre-insulated pipe comprising:
- providing a pre-insulated pipe comprising a medium conveying pipe of metal, an insulating material surrounding at least a part of the length of the medium conveying pipe and a first jacket pipe at least partly surrounding the insulating material;
- providing a branch pipe of metal, with a first end and a second end;
- making a hole in the pre-insulated pipe by removing a part of the jacket pipe and the underlying insulating material so as to expose a part of the medium conveying pipe;

- making a hole in the exposed part of the medium conveying pipe;
- positioning the first end of the branch pipe within the hole of the exposed part of the medium conveying pipe, or positioning the first end of the branch pipe around the opening of the hole of the exposed part of the medium conveying pipe;
- arch welding the first end of the branch pipe to the exposed part of the medium conveying pipe using an inert or semi-inert shielding gas, thereby forming a first fillet weld along the entire circumference of the branch pipe;
- attaching a compensating plate to the exposed part of the medium conveying pipe and along the entire circumference of the branch pipe; and
- optionally, insulating the branch pipe with an insulating material.

Another aspect relates to a process for producing an insulated branched medium conveying pipe comprising:
- providing a pre-insulated pipe comprising a medium conveying pipe of metal, an insulating material surrounding at least a part of the length of the medium conveying pipe and a first jacket pipe at least partly surrounding the insulating material;
- providing a branch pipe of metal, with a first end and a second end;
- making a hole in the pre-insulated pipe by removing a part of the jacket pipe and the underlying insulating material so as to expose a part of the medium conveying pipe;
- making a hole in the exposed part of the medium conveying pipe;
- positioning the first end of the branch pipe within the hole of the exposed part of the medium conveying pipe, or positioning the first end of the branch pipe around the opening of the hole of the exposed part of the medium conveying pipe;
- arch welding the first end of the branch pipe to the exposed part of the medium conveying pipe using an inert or semi-inert shielding gas, thereby forming a first fillet weld along the entire circumference of the branch pipe;
- attaching a compensating plate to the exposed part of the medium conveying pipe and along the entire circumference of the branch pipe; and
- optionally, insulating the branch pipe with an insulating material.

Yet another aspect relates to an insulated branched medium conveying pipe obtainable by the process according to the present invention.

For district heating and cooling solutions in e.g. the oil and gas sector and for solar heating systems, pre-insulated pipes are widely used. An assembly of a pre-insulated pipe typically comprises one or more inner pipes (medium conveying pipes) of either metal or plastic, an insulation layer such as polyurethane foam, and a casing pipe (jacket pipe) of metal or plastic. Pre-insulated pipes that are continuously manufactured can further comprise a diffusion barrier in the form of e.g. a film or foil arranged between the insulation layer and the casing material.

Still another aspect relates to the use of a metal collar in the production of insulated branched medium conveying pipes for protecting exposed insulation material during welding.

Disclosed herein is a process for producing an insulated branched medium conveying pipe. The process comprises providing a pre-insulated pipe comprising a medium conveying pipe of metal, an insulating material surrounding at least a part of the length of the medium conveying pipe and a first jacket pipe at least partly surrounding the insulating material. A hole is made in the pre-insulated pipe by removing a part of the jacket pipe and the underlying insulating material so as to expose a part of the medium conveying pipe. Thereafter, a hole is made in the exposed part of the medium conveying pipe.

A branch pipe of metal is provided for attachment to the medium conveying pipe. One end (the first end) of the branch pipe is positioned within the hole of the exposed part of the medium conveying pipe, when the diameter of the branch pipe is smaller than the diameter of the hole.

In one or more embodiments, the diameter of the hole in the exposed part of the medium conveying pipe is at most 2 mm larger than the outer diameter of the branch pipe, such as within the range of 0.001-2 mm larger, e.g. at most 1.5 mm larger, such as within the range of 0.01-1.5 mm larger, e.g. at most 1.0 mm larger, such as within the range of 0.1-1.0 mm larger, e.g. at most 0.5 mm larger, such as within the range of 0.2-0.5 mm larger than the outer diameter of the branch pipe. This is important to obtain a proper fillet welding between the medium conveying pipe and the branch pipe.

Alternatively, one end (the first end) of the branch pipe is positioned around the opening of the hole of the exposed part of the medium conveying pipe, when the diameter of the branch pipe is larger than the diameter of the hole.

The process further comprises the step of arch welding the first end of the branch pipe to the exposed part of the medium conveying pipe using an inert (e.g. argon or helium) or semi-inert (such as carbon dioxide) shielding gas, thereby forming a first fillet weld along the entire circumference of the branch pipe. It is important to operate under an inert (e.g. argon or helium) or semi-inert (such as carbon dioxide) shielding gas to avoid damaging the exposed insulation material in the hole of the pre-insulated pipe, as well as to avoid contamination of the welding site.

Tungsten Inert Gas (TIG) welding is an arc welding process that uses a non-consumable tungsten electrode to produce the weld. The weld area is protected from atmospheric contamination by an inert shielding gas, and a filler metal is normally used. A constant-current welding power supply produces energy which is conducted across the arc through a column of highly ionized gas and metal vapours known as a plasma.

In one or more embodiments, the arch welding is tungsten inert gas welding.

In order to avoid that the medium conveying pipe collapses in the vicinity of the branch during use, the process further comprises the step of attaching a compensating plate (reinforcement plate) to the exposed part of the medium conveying pipe and along the entire circumference of the branch pipe. The reinforcement of branched pipes by a compensating plate is further described in European Standard (EN) EN 13941:2009+A1:2010 - hereby incorporated by reference.

In one or more embodiments, the process further comprises the step of insulating the branch pipe with an insulating material.

In one or more embodiments, the process further comprises the step of insulating the branch pipe with an insulating material; and wherein the insulation step comprises:
- positioning a second jacket pipe around at least a part of the length of the branch pipe and attaching one end of the second jacket pipe to the first jacket pipe; and
- insulating the hole of the pre-insulated pipe, and the space between the branch pipe and the second jacket pipe with an insulating material.
In one or more embodiments, at least a part of the insulating material is introduced into the hole in the pre-insulated pipe in fluid form which subsequently foams and hardens.

In one or more embodiments, the process further comprises the step of insulating the branch pipe with an insulating material; and wherein the insulation step comprises:
- positioning a jacket pipe around at least a part of the length of the branch pipe and attaching one end of the jacket pipe to the jacket pipe of the pre-insulated pipe; and
- insulating the hole of the pre-insulated pipe, and the space between the branch pipe and said jacket pipes with an insulating material.
In one or more embodiments, at least a part of the insulating material is introduced into the hole in the pre-insulated pipe in fluid form which subsequently foams and hardens.

Insulating material in fluid form (also known as a foaming mixture) may be any type known to the skilled person. A well-known insulating material in fluid form is based on polyol and isocyanate (a polyurethane foaming mixture).

In one or more embodiments, the insulating material in fluid form is a polyurethane foaming mixture.

The insulating material in fluid form may in one or more embodiments be applied by any discontinuous pipe filling technique known within the art. Discontinuous pipe filling techniques include the pour rise technique, the top filling technique, the horizontal mid-point filling technique, the pour-pull technique and the lance withdrawal technique. The pour rise technique and the top filling technique are preferred. In these techniques the pipe to be filled is placed in an angle to the horizontal position, and the foaming mixture is injected into the cavity between the inner pipe and the outer casing at the bottom respectively at the top of the pipe, after which the foaming reaction occurs inside the cavity. Discontinuous pipe filling techniques require a foam formulation with very good flow properties, so that the entire cavity is filled with foam while at the same time achieving an even distribution of foam properties.

In order to achieve an even distribution of foam around the branch pipe, it may be an advantage to use a preformed tubular insulation adapted for application around the branch pipe. The inner diameter of a preformed tubular insulation is thereby dependant on the outer diameter of the branch pipe. In one or more embodiments, at least a part of the insulating material is a preformed tubular insulation.

In order to reduce the air gaps between the preformed tubular insulation and the branch pipe, as well as to reduce air gabs between the insulation material in the hole of the pre-insulated pipe and the preformed tubular insulation; a foaming mixture is injected into the hole in the pre-insulated pipe, and the preformed tubular insulation is mounted subsequently.

In one or more embodiments, the process further comprises the step of insulating the branch pipe with an insulating material; and wherein the insulation step comprises:
- positioning a jacket pipe around at least a part of the length of the branch pipe and attaching one end of the jacket pipe to the jacket pipe of the pre-insulated pipe; and
- insulating the hole of the pre-insulated pipe, and the space between the branch pipe and said jacket pipes with an insulating material;
wherein a part of the insulating material is introduced (e.g. injected or poured) into the hole in the pre-insulated pipe in fluid form, followed by the mounting of a preformed tubular insulation into said hole and around at least a part of the branch pipe.

In one or more embodiments, the diameter of the hole in the pre-insulated pipe is at most 2 mm larger than the outer diameter of the second jacket pipe (the jacket pipe of the insulated branch pipe), such as within the range of 0.001-2 mm larger, e.g. at most 1.5 mm larger, such as within the range of 0.01-1.5 mm larger, e.g. at most 1.0 mm larger, such as within the range of 0.1-1.0 mm larger, e.g. at most 0.5 mm larger, such as within the range of 0.2-0.5 mm larger than the outer diameter of the second jacket pipe. This is important to obtain a proper welding between the first jacket pipe (the jacket pipe of the pre-insulated pipe) and the second jacket pipes.

In one or more embodiments, the diameter ratio between the branch pipe and the medium conveying pipe is at most 0.8. This is in order to fulfil the requirements of European Standard (EN) EN 13941:2009+A1:2010.

Before welding, a metal collar for protecting the exposed insulation material in the hole of the pre-insulated pipe may be inserted between the exposed insulation material and the branch pipe.

In one or more embodiments, before arch welding the first end of the branch pipe to the exposed part of the medium conveying pipe, the process further comprises the step of protecting the exposed insulation material in the hole of the pre-insulated pipe by positioning a metal collar between the exposed insulation material and the branch pipe.

In one or more embodiments, the pre-insulated pipe further comprises a diffusion barrier in the form of e.g. a film or foil arranged between the insulation material and the first jacket pipe.

The average lambda value, a measure of thermal conductivity, is the recognised parameter used when calculating heat loss for pre-insulated pipes. The lower the average lambda value, the greater is the overall energy savings over the service life of the pipe system. The lambda value depends on the temperature. This makes it necessary to carry out measurements at a minimum of three different temperatures. The measurements are carried out on a section of a DN 50/125-140 pre-insulated pipe at least 3 metres long. This section is taken from a 12-metre length of pipe from the normal production line.

The temperature of the surroundings (ta) is kept constant while the measurements are being carried out. The temperature on the casing pipe is measured, when the temperature of the service pipe is constant. The lambda value for the three different temperature conditions can then be calculated on the basis of the temperatures of the service pipe, the casing pipe and of the surroundings. The lambda value for a pre-insulated district heating pipe is always given by an average temperature in the polyurethane foam at a temperature of 50°C. A straight line can be plotted for the calculated lambda values, because the lambda value is directly proportional to the temperature.

It is an average lambda value, because it is an average measurement over a given length of the pipe. The insulation property of insulated branched medium conveying pipes manufactured today is limited by their insulation process. The branch pipes are welded onto the medium conveying pipe. Then a jacket pipe is built around the entire structure; and finally, the space between the pipes and the jacket pipe is insulated with a polyurethane foaming mixture using a discontinuous pipe filling technique. However, when filling the space between the jacket pipe and the medium conveying pipe, there is a pressure loss through the branches, which result in an uneven foam distribution. The uneven foam distribution result in a poor average lambda values of about 0.027 W/mK. The process of the present invention retains the average lambda value of the pre-insulated pipe used. This is very important, as pre-insulated pipes from e.g. LOGSTOR®, have average lambda values within the range of 0.023-0.025 W/mK.

In one or more embodiments, the pre-insulated pipe has an average lambda value of at most 0.025 W/mK, such as within the range of 0.020-0.025 W/mK, e.g. at most 0.024 W/mK, such as within the range of 0.021-0.024 W/mK, e.g. at most 0.022 W/mK.

The jacket pipe of the pre-insulated pipe and the branch pipe are preferably of the same material in order to connect them properly; and may be of plastic or metal.

It should be noted that embodiments and features described in the context of one of the aspects of the present invention also apply to the other aspects of the invention.

### Brief description of the figures

- Figures 1A-C: show the process steps of preparing the pre-insulated pipe for branching in accordance with various embodiments of the invention;
- Figures 2A-B: show the process steps of attaching the branch pipe to the pre-insulated pipe in accordance with various embodiments of the invention;
- Figures 3A-B: show the process steps of insulating the attached branch pipe in accordance with various embodiments of the invention; and
- Figures 4A-C: show different views the metal collar for protecting the exposed insulation material in the hole of the pre-insulated pipe, and its position between the exposed insulation material and the branch pipe.

### Description of a preferred embodiment

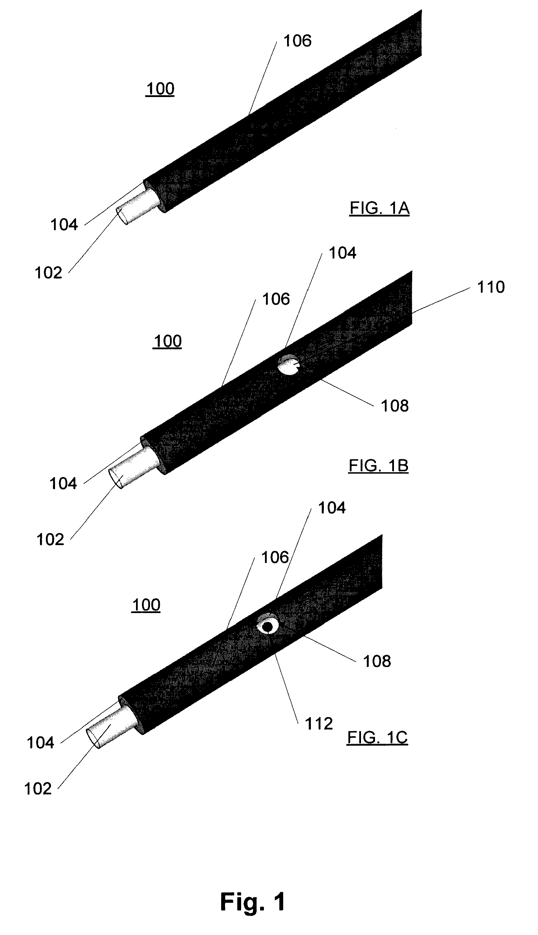

In Figure 1, the process steps (A-C) of preparing the pre-insulated pipe 100 for branching are shown. Multiple branches may be prepared on the same pre-insulated pipe, and the distance between them can be varied as appropriate for a given application. A pre-insulated pipe 100 comprises a medium conveying pipe 102 of metal, an insulating material 104 surrounding the medium conveying pipe 102 (except from the ends), and a jacket pipe 106 surrounding the insulating material 104.

A hole 108 is made in the pre-insulated pipe 100 by removing a part of the jacket pipe 106 and the underlying insulating material so as to expose a part 110 of the medium conveying pipe 102. The hole 108 is made of a size such that a branch pipe 200 and a compensating plate 300 can be welded onto the exposed part 110 of the medium conveying pipe 102.

A hole 112 is then made in the exposed part 110 of the medium conveying pipe 102, such that the branch pipe 200 can be in liquid communication with the medium conveying pipe 102.

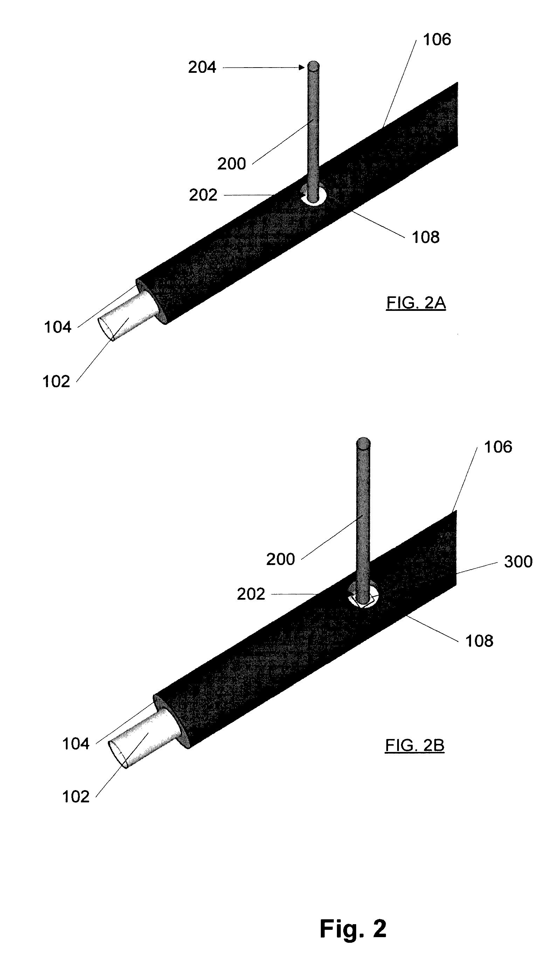

In Figure 2, the process steps (A-B) of attaching a branch pipe 200 to the pre-insulated pipe 100 are shown.

The first end 202 of the branch pipe 200 is positioned within the hole 112 of the exposed part 110 of the medium conveying pipe 102; and is then attached thereto by Tungsten Inert Gas (TIG) welding, thereby forming a first fillet weld along the entire circumference of the branch pipe 200.

A compensating plate 300 is then attached to the exposed part 110 of the medium conveying pipe 102 by Tungsten Inert Gas (TIG) welding; along the entire circumference of the branch pipe 200.

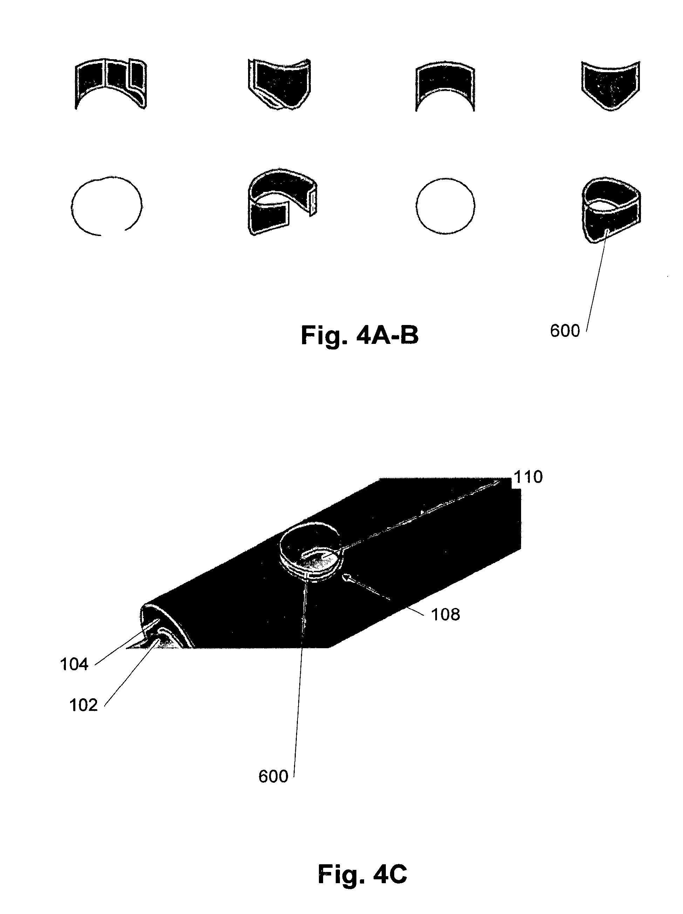

Before welding, a metal collar 600 for protecting the exposed insulation material in the hole 108 of the pre-insulated pipe is inserted between the exposed insulation material and the branch pipe. Figures 4A-B show different views of the metal collar, and its position between the exposed insulation material and the branch pipe is shown in Figure 4C.

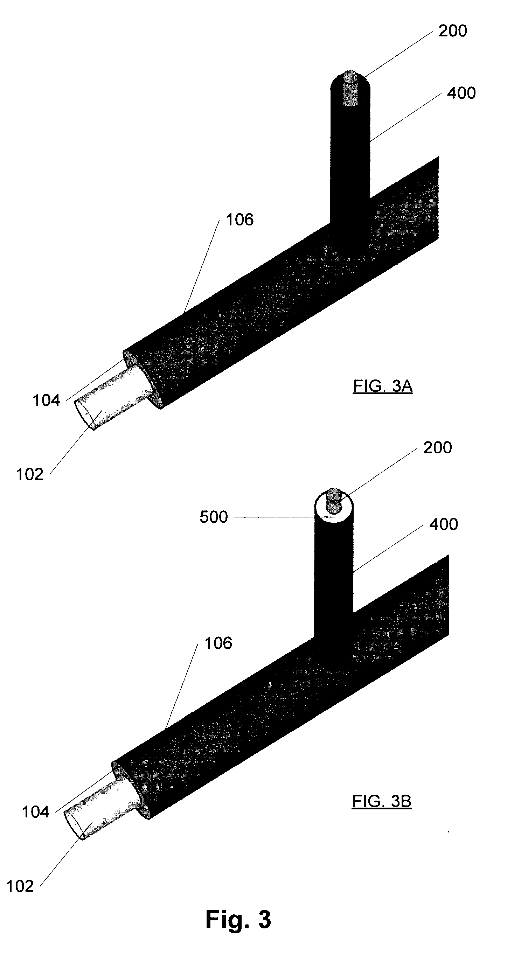

In Figure 3, the process steps (A-B) of insulating the attached branch pipe are shown.

A jacket pipe 400 is positioned around the length of the branch pipe (except the upper end portion) and is then attached to the jacket pipe 106 of the pre-insulated pipe 100 by welding.

A polyurethane foaming mixture (Component nr. 0700; poseskum 2) is then introduced into the hole 108 of the pre-insulated pipe 100; followed by the mounting of a preformed tubular insulation into said hole and around the branch pipe 200.

### References

- 100: Pre-insulated pipe
- 102: Medium conveying pipe
- 104: Insulating material
- 106: Jacket pipe
- 108: Hole in the pre-insulated pipe
- 110: Exposed part of the medium conveying pipe
- 112: Hole of the exposed part of the medium conveying pipe
- 200: Branch pipe
- 202: First end
- 204: Second end
- 300: Compensating plate
- 400: Jacket pipe
- 500: Insulating material
- 600: Metal collar

## Claims

1. A process for producing an insulated branched medium conveying pipe comprising:
- providing a pre-insulated pipe (100) comprising a medium conveying pipe (102) of metal, an insulating material (104) surrounding at least a part of the length of the medium conveying pipe (102) and a first jacket pipe (106) at least partly surrounding the insulating material (104);
- providing a branch pipe (200) of metal, with a first end (202) and a second end (204);
- making a hole (108) in the pre-insulated pipe (100) by removing a part of the jacket pipe (106) and the underlying insulating material so as to expose a part (110) of the medium conveying pipe (102);
- making a hole (112) in the exposed part (110) of the medium conveying pipe (102);
- positioning the first end (202) of the branch pipe (200) within the hole (112) of the exposed part (110) of the medium conveying pipe (102), or positioning the first end (202) of the branch pipe (200) around the opening of the hole (112) of the exposed part (110) of the medium conveying pipe (102);
- arch welding the first end (202) of the branch pipe (200) to the exposed part (110) of the medium conveying pipe (102) using an inert or semi-inert shielding gas, thereby forming a first fillet weld along the entire circumference of the branch pipe (200);
- attaching a compensating plate (300) to the exposed part (110) of the medium conveying pipe (102) and along the entire circumference of the branch pipe (200); and
- optionally, insulating the branch pipe (200) with an insulating material.

2. A process according to claim 1, further comprising the step of insulating the branch pipe (200) with an insulating material; wherein the insulation step comprises:
- positioning a second jacket pipe (400) around at least a part of the length of the branch pipe (200) and attaching one end of the second jacket pipe (400) to the first jacket pipe (106); and
- insulating the hole of the pre-insulated pipe, and the space between the branch pipe and the second jacket pipe with an insulating material (500).

3. A process according to claim 2, wherein at least a part of the insulating material (500) is introduced into the hole in the pre-insulated pipe in fluid form which subsequently foams and hardens.

4. A process according to any one of the claims 1-3, wherein the diameter of the hole (112) in the exposed part (110) of the medium conveying pipe (102) is at most 2 mm larger than the outer diameter of the branch pipe (200).

5. A process according to any one of the claims 2-4, wherein the diameter of the hole (108) in the pre-insulated pipe (100) is at most 2 mm larger than the outer diameter of the second jacket pipe (400).

6. A process according to any one of the claims 1-5, before arch welding the first end of the branch pipe to the exposed part of the medium conveying pipe, further comprising the step of protecting the exposed insulation material in the hole of the pre-insulated pipe by positioning a metal collar (600). between the exposed insulation material and the branch pipe.

7. A process according to any one of the claims 1-6, wherein the pre-insulated pipe further comprises a diffusion barrier in the form of e.g. a film or foil arranged between the insulation material and the first jacket pipe.

8. A process according to any one of the claims 1-7, wherein the pre-insulated pipe has an average lambda value of at most 0.024 W/mK.

9. An insulated branched medium conveying pipe obtainable by the process according to any one of the claims 1-8.

10. Use of a metal collar in the production of insulated branched medium conveying pipes for protecting exposed insulation material during welding.
